# EUROPEAN PATENT APPLICATION

(11) **EP 4 742 603 A1**
(43) Date of publication of application: **13.05.2026**
(21) Application number: 24275121.2
(22) Date of filing: 06.11.2024
(51) Int. Cl.: H04L 27/06

(54) **METHOD FOR DEMODULATING AN AMPLITUDE MODULATED SIGNAL**

(71) Applicant: Renishaw plc, Wotton-under-Edge, Gloucestershire GL12 8JR (GB)
(72) Inventor: The designation of the inventor has not yet been filed
(74) Representative: Rolfe, Edward William

(57) **Abstract**

A method of demodulating an amplitude-modulated signal, which is the result of a baseband signal that has been amplitude-modulated onto a carrier signal having a carrier frequency, the method comprising: a) sampling the amplitude-modulated signal so as to obtain a series of sampled points comprising: i) a plurality of temporally-distinct sampled points each of which is obtained at a first phase with respect to the period of an unmodulated version of the carrier signal; and ii) a plurality of temporally-distinct sampled points each of which is obtained at a second phase with respect to the period of an unmodulated version of the carrier signal; b) using the sampled points of i) and ii) to form a reconstructed baseband signal.

## Description

The present invention relates to a method of demodulating an amplitude modulated signal, in particular relates to a method of demodulating an inductive encoder signal, and relates to an apparatus (e.g. an inductive rotary encoder apparatus) configured to demodulate an amplitude-modulated (encoder) signal.

Inductive encoders are known and typically comprise: i) a first member (e.g. what is commonly referred to as a "rotor", in the case of a rotary encoder) for mounting to a first part of a machine (e.g. such as a shaft that is rotatable relative to a static part of the machine about an axis); and ii) a second member (e.g. what is commonly referred to as a "stator", in the case of a rotary encoder) for mounting to a second (e.g. static) part of a machine. Typically, one of the members (e.g. the second member/"stator") is an active/powered component and comprises transmit (or "excitation") and receiver coils (and associated electronics) for creating and sensing an alternating magnetic/electromagnetic field. The terms "magnetic field" and "electromagnetic field" are used interchangeably herein because the magnetic fields referred to herein are created by an electric current and therefore can also be referred to as an electromagnetic field. Also, as will be understood, references herein to a magnetic field created by an excitation or transmit coil are references to an "alternating" magnetic field created thereby, and is often referred to herein simply as a "magnetic field" for brevity. Typically, the other member (e.g. the first member/"rotor") is a passive/unpowered component comprising scale features which manipulate the electromagnetic field sensed by the second member's (e.g. the stator's) sensor coils such that the output(s) of the second member's (e.g. the stator's) receiver coil(s) are dependent on the relative position (e.g. relative rotational orientation about an axis, in the case of a rotary encoder) of the first and second members about the axis. Accordingly, the relative (e.g. rotational) position (and/or derivatives thereof) of the second member/stator and first member/rotor (and hence of the different parts of the machine) can be measured from the output(s) of the second member's/stator's receiver coil(s).

In a typical setup, the second member's (e.g. stator's) excitation coil generates an alternating "carrier" electromagnetic field (i.e. a "carrier signal") which alternates at a predetermined carrier frequency, and the first member (e.g. rotor) comprises scale features which manipulate the amplitude of the alternating carrier electromagnetic field (as sensed and output by the receiver coil(s)) dependent on the relative (e.g. rotational) position of the second member (e.g. stator) and first member (e.g. rotor) along the measurement direction (e.g. about the axis of rotation). Therefore the scale features modulate baseband information (i.e. a "baseband signal") on the alternating carrier electromagnetic field. Accordingly, the second member's (e.g. stator's) receiver coil(s) sense an amplitude-modulated alternating electromagnetic field and output an amplitude-modulated alternating voltage. The envelope of the amplitude modulated alternating voltage output by the receiver coil(s) is dependent on the relative (e.g. rotational) position of the second member (e.g. stator) and first member (e.g. rotor) along the measurement direction (e.g. about the axis of rotation), and the frequency of the amplitude modulated alternating voltage will be the same as the predetermined carrier frequency of the alternating carrier electromagnetic field. Accordingly, to determine and output a reconstructed baseband signal which can be used for position determination, the amplitude modulated alternating voltage output by the receiver coil(s) is demodulated. As mentioned earlier in this paragraph, the envelope amplitude of the amplitude-modulated alternating voltage output by the receiver coil(s), and therefore the demodulated/reconstructed baseband signal, is dependent on and hence indicative of the relative (e.g. rotational) position of the stator and rotor along a measurement direction (e.g. about the axis of rotation). Accordingly, the quality of the demodulated/reconstructed baseband signal can directly impact the positional accuracy of the output of the inductive (e.g. rotary) encoder.

The present invention relates to an improved demodulation process.

According to a first aspect of the invention there is provided a method of demodulating an amplitude-modulated signal, which is the result of a baseband signal that has been amplitude-modulated onto a carrier signal having a carrier frequency, the method comprising: a) sampling the amplitude-modulated signal so as to obtain a series of sampled points. The sampled points can comprise: i) a plurality of temporally-distinct sampled points each of which is obtained at a first phase (position/angle) with respect to the (e.g. the, or a notional) period of an unmodulated version of the carrier signal. The sampled points can comprise: ii) a plurality of temporally-distinct sampled points each of which is obtained at a second phase (position/angle) with respect to the period of an (e.g. the, or a notional) unmodulated version of the carrier signal, wherein the second phase (position/angle) is different to the first phase (position/angle). The method can be configured to: b) using the sampled points of i) and ii) to form a reconstructed baseband signal.

According to a second aspect of the invention, there is provided an apparatus configured to demodulate an amplitude-modulated signal, which is the result of a baseband signal that has been amplitude-modulated onto a carrier signal having a carrier frequency, the apparatus being configured to: a) sample an amplitude-modulated signal so as to obtain a series of sampled points. The sampled points can comprise: i) a plurality of temporally-distinct sampled points each of which is obtained at a first phase (position/angle) with respect to the period of an unmodulated version of the carrier signal. The sampled points can comprise: ii) a plurality of temporally-distinct sampled points each of which is obtained at a second phase (position/angle) with respect to the period of an unmodulated version of the carrier signal, wherein the second phase is different to the first phase. The apparatus can be further configured to: b) use the sampled points of i) and ii) to form a reconstructed baseband signal. As will be understood, the apparatus can comprise (one or more) processing means/device/electronics configured to perform a) and b).

Compared to known prior art demodulation techniques in which the amplitude-modulated signal is sampled such that sampled points are obtained at only a first phase (position/angle) with respect to the period of an (e.g. the, or a notional) unmodulated version of the carrier signal, the demodulation technique of the present invention provides a superior demodulation technique. In particular, the demodulation technique of the present invention can help to provide a more accurate reconstructed baseband signal and/or the demodulation technique of the present invention can help to remove errors in the reconstructed baseband signal; for example, symmetrical errors caused by caused by non-linearities in the processing electronics for sensing and/or demodulating the amplitude-modulated signal (compared to a raw reconstructed baseband signal derived from points obtained at just one phase (position/angle) with respect to an unmodulated version of the carrier signal).

If the points in time at which the sampled points of i) and ii) are plotted against an unmodulated version of the carrier signal (regardless of the relative phasing between the unmodulated version of the carrier signal and the amplitude-modulated signal), the sampled points of i) would lie at a first phase (position/angle) of the period of the unmodulated version of the carrier signal, and the sampled points of ii) would lie at a second (different) phase (position/angle) of the period of the unmodulated version of the carrier signal. As will be understood, it is not necessary that the actual unmodulated version of the carrier signal is known by the process/system implementing the method of the invention to ensure that sampled points of i) and ii) would have different phases with respect to an unmodulated version of the carrier signal - for instance, the sampling timings to obtain the sampled points of i) and ii) could be derived from the amplitude-modulated signal itself (e.g. from the zero-crossing points of the carrier content of the amplitude-modulated signal), because the carrier content therein is representative of the unmodulated version of the carrier signal (and so the period of an unmodulated version of the carrier signal can be derived therefrom). In alternative embodiments, the unmodulated version of the carrier signal can be assumed. As will also be understood, it is also not necessary to know the absolute values of the first and second phase positions/angles with respect to the period of an unmodulated version of the carrier signal. Rather, it is just sufficient to ensure that the sampled points of i) and ii) are obtained at first and second phases that are different to each other (with respect to the period of an (e.g. the, or a notional) unmodulated version of the carrier signal).

As will be understood, an unmodulated version of the carrier signal will have the same period as the period of carrier content of the amplitude-modulated signal.

The first phase (position/angle) and second phase (position/angle) could be predetermined phase positions.

As will be understood, the first phase and second phase can be an angular phase value of between 0° and 360°.

In preferred embodiments, the phase difference between the first and second phases is substantially 180°. As will be understood, this is not the absolute phase difference between successive sampling points with respect to the amplitude-modulated signal, but rather is the phase difference between the first and second phases with respect to the period of an unmodulated version of the carrier signal. Accordingly, the phase difference between the first and second phases could be determined for example: by plotting on one notional period of the unmodulated version of the carrier signal (which cycles once between 0° and 360°) the phase (position/angle) at which the sampled points of i) are obtained, and also the phase (position/angle) at which the sampled points of ii) are obtained, and ii) determine the difference between them. Accordingly, in this case, it can be considered that the phase difference between the first and second phases with respect to the period of an unmodulated version of the carrier signal will always be a value between 0° and 360° regardless of the absolute phase difference between successive sampling points with respect to the amplitude-modulated signal.

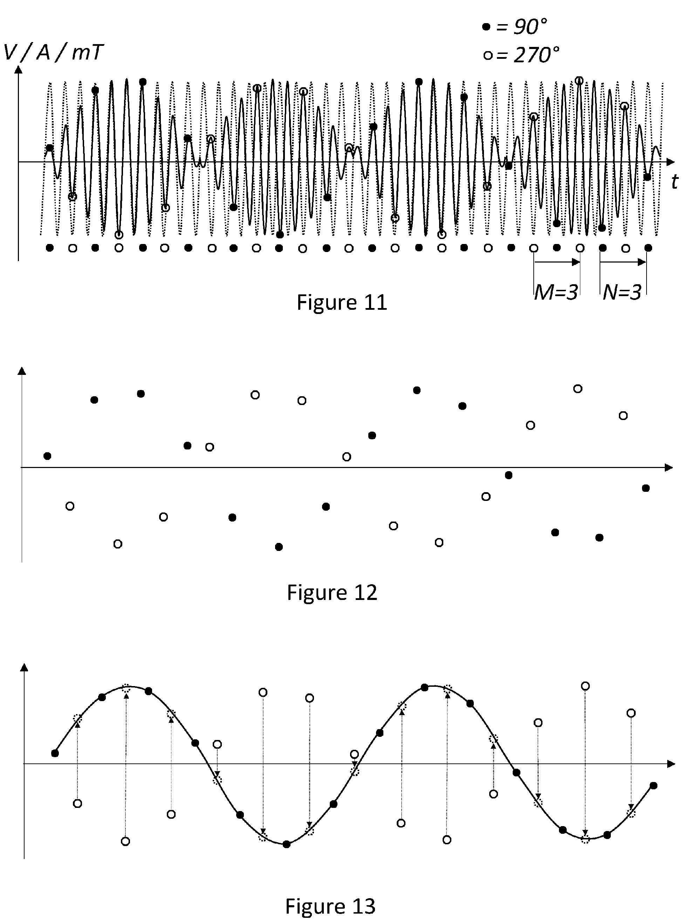

Indeed, as will be understood, it is not necessary that successive sampled points are obtained within one period of an unmodulated version of the carrier signal (and therefore it is not necessary that successive sampled points are obtained within one actual period of the amplitude-modulated carrier signal). For instance, in the examples depicted below in connection with Figures 11 to 16, successive sampled points are not obtained within one period of an unmodulated version of the carrier signal. Rather, successive sampled points are obtained every 1.5 periods of an unmodulated version of the carrier signal.

The plurality of sampled points of i) can be obtained at regular time-spaced intervals, such that a sample point is obtained at the first predetermined phase every N^{th} cycle of an unmodulated version of the carrier signal. The plurality of sampled points of ii) can be obtained at regular time-spaced intervals, such that one sample point is obtained at the second predetermined phase every M^{th} cycle of an unmodulated version of the carrier signal. N and M can be positive integers. N need not be equal to M, although this can be preferred to ensure balance in the processing/generation of the reconstructed baseband signal. As shown in the embodiments of Figures 11 to 16, N and M are 3, but this need not necessarily be the case.

Whilst not necessary, it can be preferred that the method is configured such that the sampled points of i) and ii) coincide with carrier peaks of the amplitude-modulated signal. The closer that the sampled points are to the carrier peaks, the greater the amplitude of the reconstructed baseband signal. As will be understood, carrier peaks include both positive and negative carrier peaks.

Step b) can comprise inverting the polarity of the sampled points of i) or ii).

Step b) can comprise averaging multiple sampled points (e.g. averaging at least two sampled points). Step b) can comprise averaging successive sampled points. Accordingly, step b) can comprise determining the average of at least one sampled point from i) and at least successive sampled point from ii). Such averaging could comprise first inverting the polarity of sampled point(s) from i) or inverting the polarity of sampled point(s) from ii), then adding them together and dividing by the total number of points used. Such averaging could comprise subtracting; e.g. subtract from a first point in i), a successive points from ii), then divide by two (of course, multiple points from i) and ii) could be used in the subtraction, in which case the result will be divided by the total number of points used).

Step b) can comprise processing the sampled points to derive a reconstructed baseband signal which has reduced errors caused by non-linearities in the (transfer function of the) system (e.g. processing means/electronics) for sensing and/or demodulating the amplitude-modulated signal (e.g. compared to a raw reconstructed baseband signal derived from such points which have not been processed as such). Such errors could be cyclic errors; that is errors that repeat every cycle of the reconstructed baseband signal. Such processing of the sampled points (to derive a reconstructed baseband signal which has reduced errors caused by such non-linearities in the transfer function) can comprise averaging multiple sampled points (e.g. averaging at least two sampled points). Such processing/averaging could comprise averaging successive sampled points. Such processing/averaging could comprise inverting the polarity of the sampled points of i) or ii). Such averaging could comprise first inverting the sampled point(s) from i) or inverting the sampled point(s) from ii), then adding them together and dividing by the total number of points used. Such averaging could comprise subtracting; e.g. subtract from a first point in i) a successive points from ii), then divide by two (of course, multiple points from i) and ii) could be used in the subtraction, in which case the result will be divided by the total number of points used).

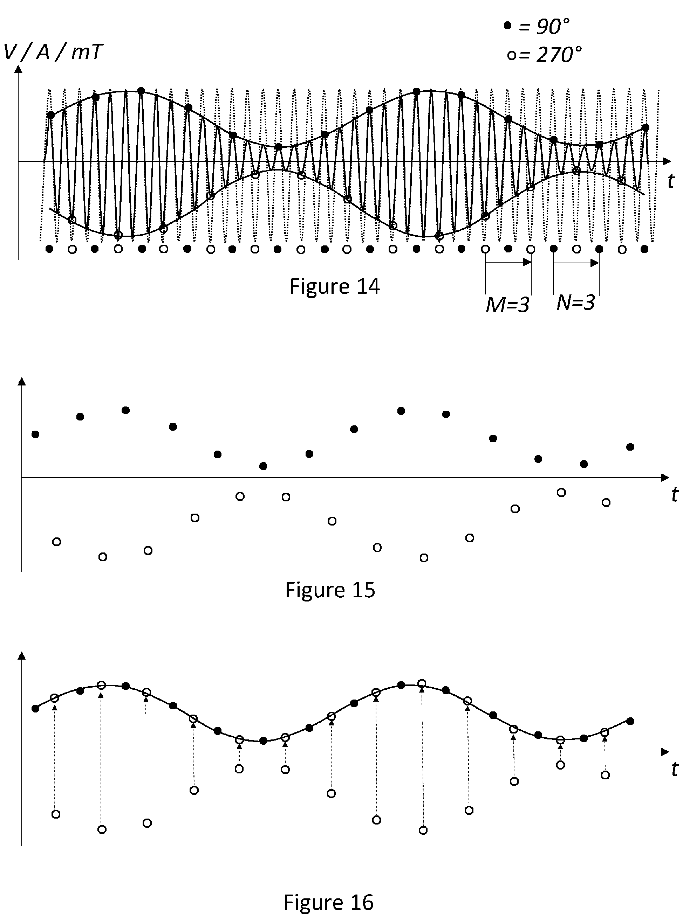

The amplitude-modulated signal can have a modulation depth of less than or equal to 100% (in which case the phase of the carrier content of the amplitude-modulated signal does not shift - as per the example of Figures 14 to 17 described in more detail below) or can have a modulation depth of greater than 100% (in which case the phase of the carrier content of the amplitude-modulated signal does shift as per the example of Figures 11 to 13 described in more detail below (which in that embodiment has a modulation depth of 200%).

The amplitude-modulated signal can be a signal output by a receiver coil (for example, of an inductive encoder apparatus). The receiver coil could comprise a differential coil (e.g. which can lead to the modulation depth of the amplitude-modulated signal output thereby being greater than 100%).

A receiver coil can comprise a pair of phase-shifted coils, such that a receiver coil provides a pair of phase-shifted amplitude-modulated signals (e.g. which could be referred to as SIN and COS signals). Accordingly, the method of the invention can be used to demodulate both (SIN and COS) outputs thereof, individually. A receiver coil can comprise a pair of phase-shifted differential coils. For example, a receiver coil can comprise a SIN coil (providing a SIN signal) and a COS coil (providing a COS signal), each of which comprises a differential coil.

As will be understood, another commonly used term in the field of inductive encoders for "excitation coil" is "transmit coil". Accordingly, the term "transmit coil" could be used in place of the term "excitation coil" herein.

The apparatus can be an inductive encoder apparatus.

The amplitude-modulated signal can be a signal induced in a receiver coil by a carrier alternating magnetic field. The carrier alternating magnetic field could be generated by an alternating current passing through an excitation coil, e.g. of an inductive encoder apparatus. The carrier alternating magnetic field could have been amplitude-modulated by a scale track (e.g. of an inductive encoder) that is moveable relative to the receiver coil (and excitation coil) along a measurement direction. The amplitude-modulating effect of the scale track on the carrier alternating magnetic field can be dependent on the relative position of the receiver coil and scale track along the measurement direction. Accordingly, in this case, the baseband signal that has been amplitude-modulated onto the carrier signal (e.g. the carrier alternating magnetic field) is the envelope amplitude-modulating effect provided by (e.g. inductive encoder's) scale track. Accordingly, the baseband signal can be a (e.g. the inductive encoder's) position signal. The method can comprise using the reconstructed baseband signal to determine the relative position of the receiver coil and the scale track along the measurement direction.

The apparatus (e.g the inductive encoder apparatus) can comprise: a first member comprising a scale track; and a second member comprising an excitation coil and the receiver coil. The first and second members can be relatively moveable along a measurement direction. The signal output by the receiver coil can be induced in the receiver coil by an alternating carrier magnetic field generated by an alternating current passing through the excitation coil. The amplitude of the alternating carrier magnetic field can be modulated by the scale track dependent on the relative position of the first and second members along the measurement direction. Accordingly, the method can comprise using the reconstructed baseband signal to determine the relative position of the first and second members along the measurement direction.

The (e.g. inductive encoder apparatus) can comprise a plurality of receiver coils. The (e.g. inductive encoder apparatus) can comprise a plurality of corresponding scale tracks. For example, the (e.g. inductive encoder) apparatus can comprise a first member comprising a first and a second scale track (e.g. having different scale periods); and a second member comprising an excitation coil and first and second receiver coils, wherein: the first and second members are relatively moveable along a measurement direction. The signal output by the first receiver coil can be induced in the first receiver coil by an alternating carrier magnetic field generated by an alternating current passing through the excitation coil, the amplitude of which is modulated by the first scale track dependent on the relative position of the first and second members along the measurement direction, and the signal output by the second receiver coil is induced in the second receiver coil by an alternating carrier magnetic field generated by an alternating current passing through the excitation coil, the amplitude of which is modulated by the second scale track dependent on the relative position of the first and second members along the measurement direction. Accordingly, the method can comprise using the reconstructed baseband signals derived from the first and second receiver coils to determine the relative position of the receiver coil and the scale track along the measurement direction.

The inductive encoder apparatus can be a rotary encoder apparatus. Accordingly, the receiver (and excitation) coil(s) and the scale track(s) (and in accordance with the above few paragraphs, the first and second members of the inductive encoder apparatus) can be relatively rotatable about an axis of rotation. Accordingly, the measurement direction can be a rotational measurement direction. The at least first scale track can extend (e.g. annularly) around a scale axis. The excitation and receiver coils can extend (e.g. annularly) around a coil axis at different radii to each other. As will be understood, the inductive rotary encoder can be configured such that, in use/when assembled, it is intended/configured to be arranged such that the scale axis, the coil axis and the axis of rotation are all substantially parallel to each other, and optionally are all substantially coincident/coaxial. As will be understood, in embodiments in which the scale track, the excitation coil and/or the receiver coil extends annularly (around its respective axis), this includes both fully annularly, and substantially fully annularly (e.g. around at least 75% of the full annular extent, more preferably around at least 90% of the full annular extent).

The excitation and/or receiver coil can comprise a single-turn coil.

A scale track can comprise a series, e.g. an array, of (electrically) conductive/non-conductive scale features. In other words, a scale track can comprise a series of alternating (electrically) conductive and non-conductive scale features. A scale track can comprise a periodic arrangement of scale features. Accordingly, a scale track can comprise a periodic arrangement of (electrically) conductive/non-conductive scale features. In other words, a scale track can comprise a periodic series of alternating (electrically) conductive and non-conductive scale features. As will be understood, the required or desired the level of resistivity of the conductive and non-conductive features can vary from application to application. Nevertheless, in connection with preferred embodiments of the invention, the electrically conductive scale features have a resistivity of less than 1×10⁻⁶ ohm-metre (e.g. copper has a resistivity of about 1.7×10⁻⁸ ohm-metre), and the resistivity of non-conductive features is greater than 1×10⁻⁴ ohm-metre, and for example can be significantly higher than that, for example, even greater than 1 ohm -metre, for example greater than 1×10³ ohm-metre.

As will be understood, references herein to conductive (and non-conductive) relate to electrical conductivity, and for brevity will often be referred to as just conductive and non-conductive.

As will be understood, references herein to a "processing" or "processor" means/device/electronics can comprise bespoke processing means/device/electronics configured for the specific application (e.g. a field programmable gate array "FPGA") as well as a more generic processing means/device/electronics which can be programmed (e.g. via software) in accordance with the needs of the application in which it is used. Accordingly, a suitable "processing" or "processor" means/device/electronics can comprise, for example, a CPU (Central Processor Unit), FPGA (Field Programmable Gate Array), or ASIC (Application Specific Integrated Circuit), or the like.

The "processing" or "processor" means/device/electronics, could be provided as part of an inductive encoder apparatus for example. For example, such "processing" or "processor" means/device/electronics could be provided as part of one of the first or second members (in which case, preferably the second member). But this doesn't necessarily have to be the case and the inductive encoder apparatus could comprise a separate component which comprise said means (e.g. one or more "processing" or "processor" devices) for determining from the at least three separate signal channels, information concerning the rotational position, and/or a derivative thereof, of the first and second members about the axis of rotation. For instance, the inductive encoder could comprise said first and second members and a separate interface unit comprising said "processing" or "processor" means/device/electronics.

According to a third aspect of the invention there is provided an inductive encoder apparatus comprising first and second members relatively moveable along a measurement direction, wherein:
- the first member comprises at least a first scale track,
- the second member comprises an excitation coil and a first receiver coil,
- the inductive encoder apparatus is configured to:
   ∘ pass an alternating current through the excitation coil at a predetermined frequency so as to generate an carrier alternating magnetic field having a carrier frequency, the amplitude of which is modulated by the first scale track dependent on the relative position of the first and second members along the measurement direction, whereby an amplitude-modulated signal is induced in the receiver coil by the alternating magnetic field as modulated by the first scale track;
   ∘ sample the amplitude-modulated signal induced in the first receiver coil so as to obtain:
      ▪ i) a plurality of temporally-distinct sampled points each of which is obtained at a first phase with respect to the period of the carrier alternating magnetic field; and
      ▪ ii) a plurality of temporally-distinct sampled points each of which is obtained at a second phase with respect to the period of the carrier alternating magnetic field;
   ∘ use the sampled points of i) and ii) to form a signal representative of the envelope amplitude of the first receiver coil's amplitude-modulated signal, and to use that signal in determining the relative position of the first and second members.

The inductive encoder apparatus can be a rotary encoder apparatus, wherein the first and second members are relatively rotatable about an axis of rotation. Accordingly, the measurement can be a rotational measurement direction. The excitation coil can be a single-turn coil. The receiver coil can be a single-turn coil. The receiver coil can comprise a differential coil.

Features, techniques and means described above in connection with the first and second aspects of the invention are equally applicable to this third aspect of the invention, and vice versa, and therefore are not repeated for the sake of brevity.

According to a fourth aspect of the invention there is provided a method of demodulating an amplitude-modulated signal, which is the result of a baseband signal that has been amplitude-modulated onto a carrier signal having a carrier frequency, the method comprising:
a) sampling the amplitude-modulated signal so as to obtain sampled points which comprise:
   i) a plurality of temporally-distinct sampled points each of which is obtained at a first phase with respect to the period of an unmodulated version of the carrier signal; and
   ii) a plurality of temporally-distinct sampled points each of which is obtained at a second phase with respect to the period of an unmodulated version of the carrier signal;
b) using the sampled points of i) and ii) to form a reconstructed version of the baseband signal that has reduced symmetrical error caused by non-linearities in the processing electronics for sensing and/or demodulating the amplitude-modulated signal (i.e. compared to a reconstructed baseband signal formed from sampled points obtained at just one phase with respect to the period of an unmodulated version of the carrier signal).

Features, techniques and means described above in connection with the first, second and third aspects of the invention are equally applicable to this fourth aspect of the invention, and vice versa, and therefore are not repeated for the sake of brevity.

Embodiments of the invention will now be described, by way of example only, with reference to the following drawings, in which:
Figure 1 is a perspective view of an inductive rotary encoder comprising a rotor and a stator;
Figure 2 is a schematic cross-sectional view of the inductive rotary encoder of Figure 1 mounted on a machine;
Figure 3 is a plan view of the rotor of Figure 1, in particular a plan view of the side of the rotor that faces the stator when in use;
Figure 4 is a plan view of the stator of Figure 1, in particular a plan view of the side of the stator that faces the rotor when in use;
Figure 5 shows a plan view of a quadrant of the stator and rotor overlayed each other, as would be the case when the stator and rotor are assembled as shown in Figure 2, wherein the stator's substrate is transparent so that the rotor can be seen under the stator;
Figure 6a schematically illustrates a part of the differential SIN coil (e.g. of the first receiver coil of the stator of the inductive rotary encoder of Figure 1) in isolation;
Figure 6b schematically illustrates a part of the differential COS coil (of the first receiver coil of the stator of the inductive rotary encoder of Figure 1) in isolation;
Figure 6c schematically illustrates a different part of the differential SIN and COS coils (of the first receiver coil of the stator of the inductive rotary encoder of Figure 1) overlayed;
Figure 7 is a block diagram of the system for calculating a measure of the relative rotational position of the rotor and stator;
Figure 8 is a graph illustrating how the output of the Arc Tangent Calculator for each receiver coil varies with relative rotation of the stator and rotor;
Figure 9 schematically illustrates an example alternating current *A* used to drive the excitation coil, and also therefore schematically illustrates the magnitude (in millitesla *mT*) of the "carrier signal"/the carrier alternating electromagnetic field created by that drive current;
Figure 10 shows a graph of an example amplitude-modulated signal as sensed and output by one of the differential coils (e.g. the differential SIN coil, or the differential COS coil of_the first receiver coil of the stator of the inductive rotary encoder of Figure 1);
Figure 11 shows the graphs of Figures 9 and 10 superimposed on each other;
Figure 12 illustrates the sampled points of Figure 11 in isolation;
Figure 13 illustrates the reconstructed demodulated baseband signal obtained from the sampled points of Figure 11/12;
Figures 14 to 16 illustrate graphs similar to those of Figure 11 to 13, expect that in the embodiment of Figures 14 to 16, the modulation depth of the amplitude-modulated signal is less than 100%; and
Figure 17(a) is a transfer function graph, where the solid black line illustrates a notional ideal transfer function where there are no non-linearities in the system, whereas the dashed curved line illustrates a more likely transfer function in which there are non-linearities in the system; and
Figure 17(b) illustrates the symmetrical function for the likely transfer function of the dashed line of Figure 17(a).

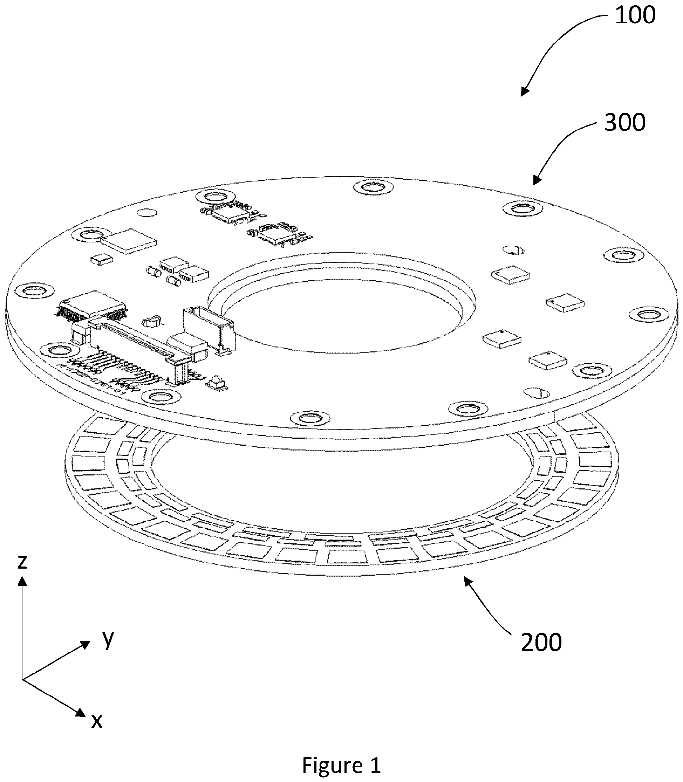

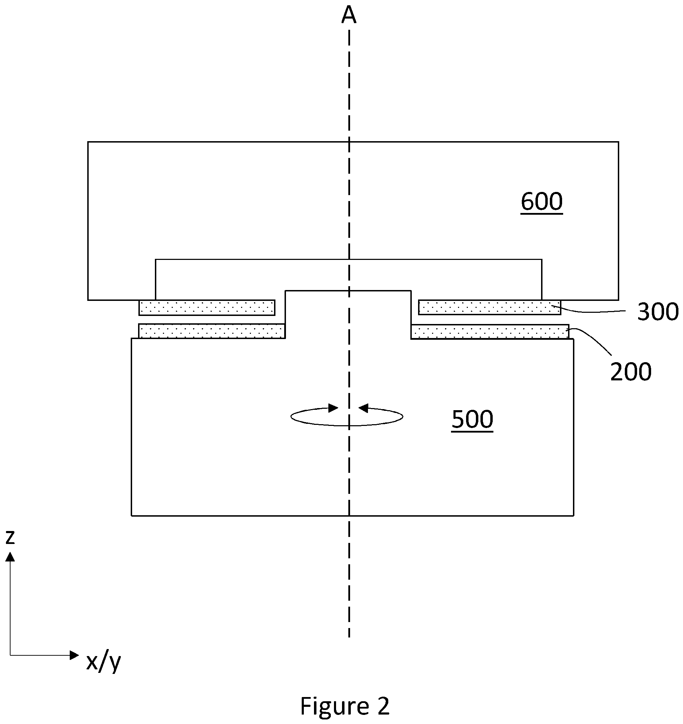

Referring to Figures 1 and 2, an inductive rotary encoder 100 comprises a rotor 200 and a stator 300. As schematically shown in Figure 2, in use, the rotor 200 is mounted to a part of a machine such as a shaft 500 that is rotatable relative to a static part 600 of the machine about an axis A, and the stator 300 is mounted to the static part 600 of the machine. Similar to known inductive rotary encoders, the stator 300 is an active/powered component and comprises excitation and receiver coils (described in more detail below) and associated electronics for creating and sensing an alternating electromagnetic field. Also similar to known inductive rotary encoders, and as explained in more detail below, the rotor 200 is a passive/unpowered component comprising scale features which manipulate the electromagnetic field sensed by the stator's 300 receiver coils such that the outputs of the stator's receiver coils are dependent on the relative rotational orientation of the stator 300 and rotor 200 about the axis A, whereby the relative rotational position (and/or derivatives thereof) of the stator 300 and rotor 200 (and hence of the static 600 and rotational 500 parts of the machine) can be measured/determined therefrom.

As will be understood, the rotor 200 and stator 300 could be configured the other way around (that is the rotor could have the active components, i.e. the excitation and receiver coils, thereon and the stator could have the passive components, i.e. the scale features, thereon) but due to the need for electrical connections it can be simpler and easier for the stator to be the active/powered component. Also, the rotor can be subject to high forces due to its motion and change in velocity, and so it can be beneficial to make the rotor the passive/unpowered component because the electronics on the active components can be susceptible to such forces. As will be understood, in a different embodiment, both of the members could rotate, that is both the "stator" and "rotor" could be rotatable, in which case both the "stator" 300 and "rotor" 200 could be referred to as "rotors", e.g. "rotor 1" and "rotor 2", or "active rotor" and "passive rotor". Nevertheless, for the sake of simplicity and illustration, the embodiment described has a static "stator" 300 and a "rotor" 200 that is rotatable relative to the stator 300.

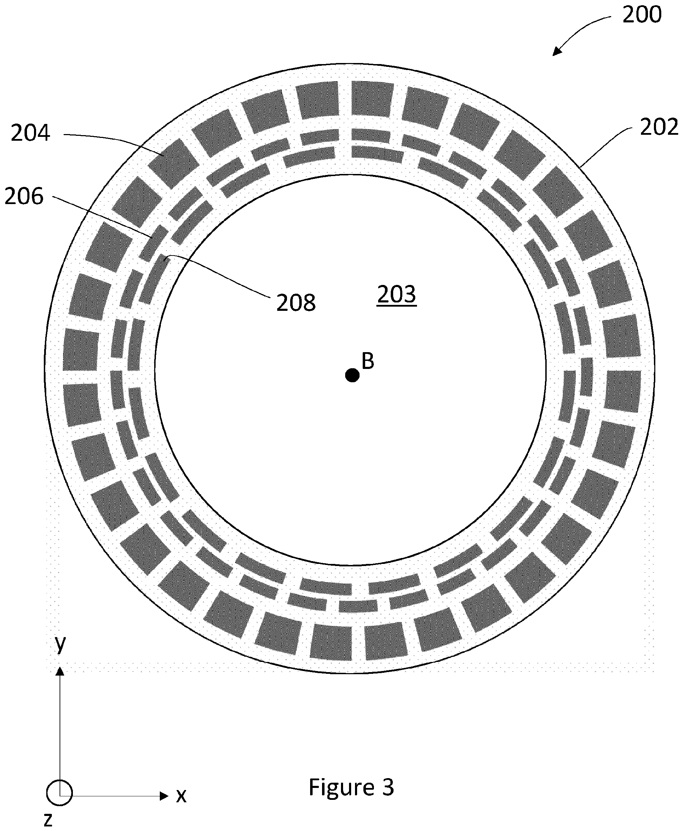

Referring to Figure 3, a plan view of the ("stator-facing side" of the) rotor 200 is shown. In the embodiment described, the rotor 200 comprises a disc-shaped substrate 202 on which scale features are provided. In the embodiment described, the substrate is made from fibreglass and has a generally circular shape and has a hole 203 extending through its middle such that the machine shaft (not shown in Figure 3) can be passed therethrough. As will be understood, the rotor substrate 202 could be made from other (e.g. non-conductive) materials, need not necessarily have a circular or disc-like configuration, and need not necessarily have a hole extending therethrough.

The rotor's 200 scale features are centred on and extend annularly around an axis B. In the embodiment described, the scale features are electrically conductive (in this embodiment copper, and are formed on the substrate by etching/milling away a copper coating on the fibreglass substrate 202; although could be formed via other processes, such as copper plating). In an alternative embodiment, the substrate 202 could comprise an electrically conductive material, wherein non-conductive features are formed thereon so as to provide the scale features.

In the embodiment described, the rotor 200 comprises a first scale track 204 centred on and extending annularly around the axis B, a second scale track 206 centred on and extending annularly around the axis B, and a third scale track 208 centred on and extending annularly around the axis B. Each scale track comprises a periodic series of scale features. The periods of the first 204, second 206 and third 208 scale tracks are different to each other. The first 204, second 206 and third 208 scale tracks are configured such that each scale track has an integer number of periods per revolution, and are arranged such that the phase relationship between the scale features of the three scale tracks at any angle about the axis B is mutually exclusive compared to any other angle of rotation. In other words, the first 204, second 206 and third 208 scale tracks are configured such that the phase relationship of the scale features (i.e. the combination of the phase values) of the scale tracks is unique for each angle about the axis B.

As shown, the first 204, second 206 and third 208 scale tracks are arranged concentrically with each other, and are all centred on the same axis B. As also shown, the width as measured in the radial dimension (e.g. "radial width") of the first scale track 204 is larger than that of the second 206 and third 208 scale tracks, and in the embodiment shown, the radial width of the first scale track 204 is about double that of the second 206 and third 208 scale tracks. However, this need not necessarily be the case. For instance the radial width of all three scale tracks could be the same, or one or both of the second 206 and third 208 scale tracks could be larger than the radial width of the first scale track 204.

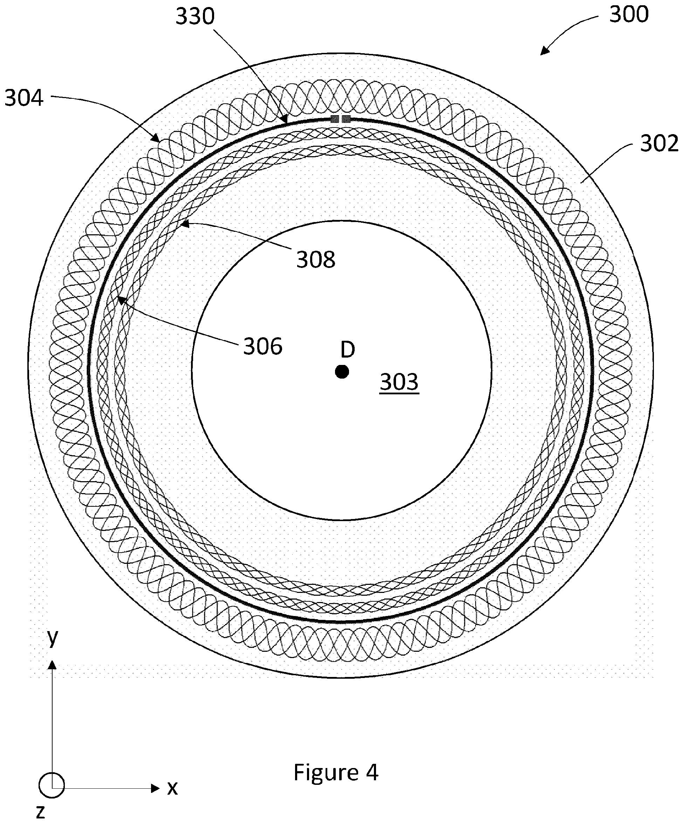

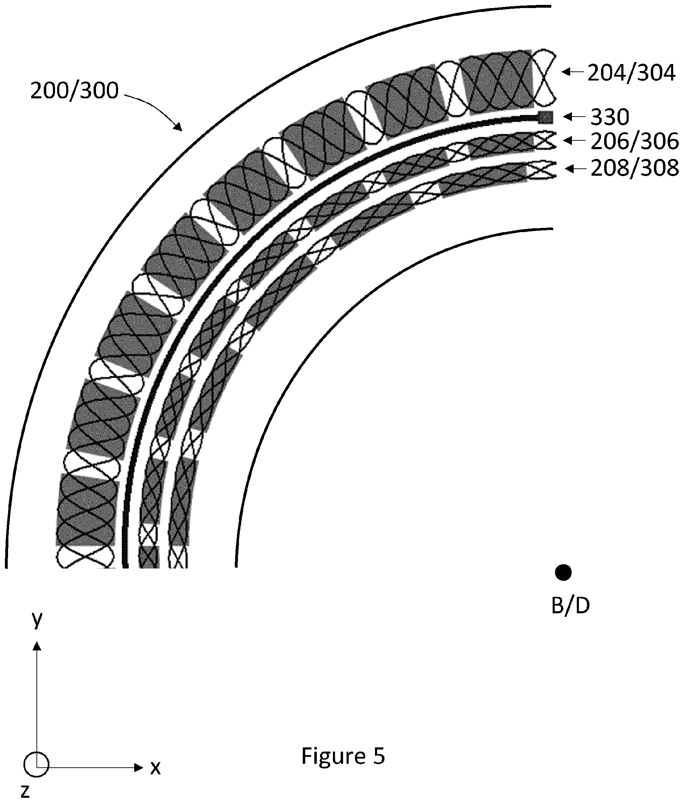

Turning now to Figures 4 and 5, Figure 4 shows a plan view of the ("rotor-facing side" of the) stator 300 and Figure 5 shows a plan view of a quadrant of the stator 300 and rotor 200 overlayed each other, as would be the case when the stator and rotor are assembled as shown in Figure 2, wherein the stator's substrate is transparent so that the rotor can be seen under the stator. The stator 300 comprises a disc-shaped substrate 302 on which the excitation and receiver coils are provided, along with associated electronics which are provided on the other side of the substrate 302 to that shown. (In Figure 5, the shading of the stator substrate has been omitted to aid viewing of the other features of the stator). In the embodiment described, the substrate 302 of the stator is made from fibreglass and has a generally circular shape and has a hole extending through its middle such that the machine shaft 500 can be passed therethrough. In the embodiment described, the stator 300 comprises multiple fibreglass layers stuck together such that, as described in more detail below, the conductors of the coils can cross over each other on different layers without short-circuiting. In accordance with other embodiments of the invention, the stator substrate 302 could be made from other non-conductive materials (such as ceramic), need not necessarily have a circular or disc-like configuration, need not necessarily have multiple layers stuck together, and need not necessarily have a hole extending therethrough.

The stator 300 comprises a first scale receiver coil 304, a second scale receiver coil 306, and a third scale receiver coil 308, which are concentrically arranged and each of which are centred on and extend annularly around an axis D. As shown, the width as measured in the radial dimension (e.g. "radial width") of the first 304 receiver coil is larger than that of the second 306 and third 308 receiver coils. In the embodiment shown, the radial width of the first 304 receiver coil is about double that of the second 306 and third 308 receiver coils. As illustrated in Figure 5, the radial positions and radial widths of the first scale track 204 and first receiver coil 304 are substantially the same, the radial positions and radial widths of the second scale track 206 and second receiver coil 306 are substantially the same, and the radial positions and radial widths of the third scale track 208 and third receiver coil 308 are substantially the same. Accordingly, when assembled as shown in Figures 2 and 5 such that the axes B and D are coaxial, the first scale track 204 and first 304 receiver coil are substantially radially aligned/coincident, the second scale track 206 and second receiver coil 306 are substantially radially aligned/coincident, and the third scale track 208 and third receiver coil 308 are substantially radially aligned/coincident.

As will be understood, because the receiver coils progress around the axis D along a wave-like (e.g. sinusoidal) path, another appropriate term for radial width of a receiver coil is "coil amplitude".

The radial width of the coil and scale track/features can have a significant impact on the amplitude of the demodulated/baseband signal. As explained in more detail below, because the first scale track 204 has the highest number of integer periods per revolution compared to the other tracks, it can be used to obtain higher resolution position information compared to the other tracks, and so in this embodiment the first scale track 204 and the associated first receiver coil 304 are wider than the second 206/306 and third 208/308 scale tracks/receiver coils so as to increase the signal-to-noise ratio of the demodulated/baseband signal obtained from the first receiver coil, thereby helping to improve positional accuracy. As will be understood, this need not necessarily be the case, e.g. they could all have the same width, or for instance the width of the second and/or third receiver coils could be larger than that of the first receiver coil.

In the embodiment described, each of the first 304, second 306 and third 308 receiver coils actually comprise two different/separate coils (in this embodiment two different copper conductors); in particular a first sinusoidally-extending differential coil and a second sinusoidally-extending differential coil. The first and second differential coils are overlapping and are phase shifted by 90° relative to each other. Accordingly, the first differential coil could be referred to as a SIN coil and the second differential coil could be referred to as COS coil. As explained in more detail below, each of the first 304, second 306 and third 308 receiver coils will actually output a pair of signals which are in quadrature (i.e. the signals are phase-shifted by 90°), and so, for example, can be labelled as SIN and COS signals. As will be understood, other configurations are possible, such as a three-phase system, comprising three sets of coils phase shifted by 60°. In another embodiment, each track/channel could comprise just a single coil, but such a system would be less accurate.

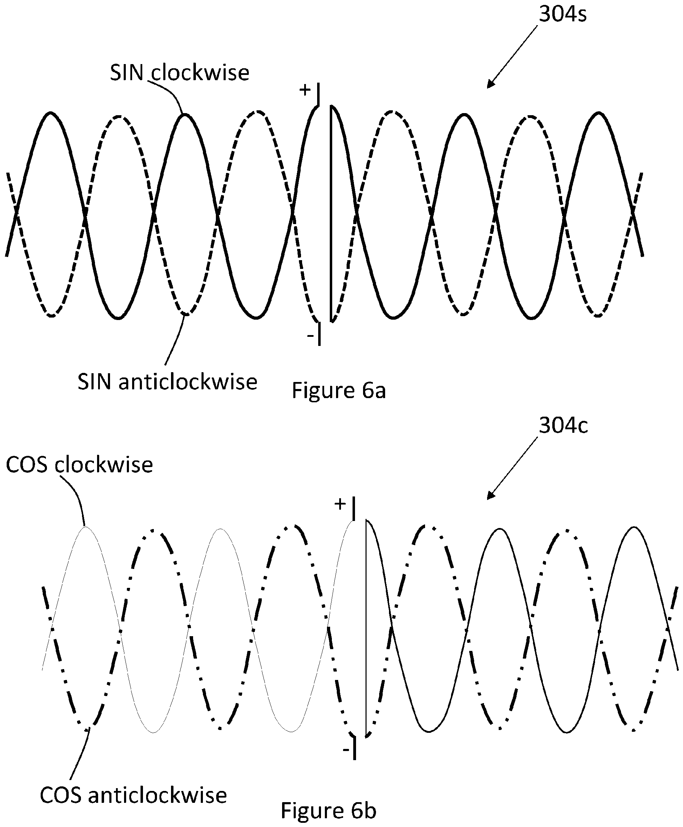

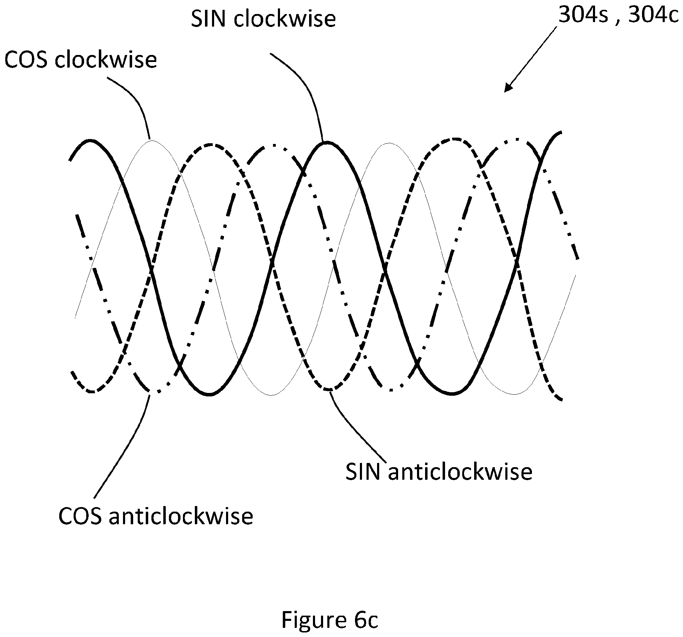

Each of the differential SIN and COS coils of the first 304, second 306 and third 308 receiver coils have a clockwise and an anticlockwise turn per period (and the same is also true for the SIN and COS coils of the second 306 receiver coil and the SIN and COS coils of the third 308 receiver coil). This is schematically depicted in Figures 6a and 6b, where the SIN and COS coils of the first receiver 304 coil are shown in isolation. In Figure 6a, the clockwise turns of the SIN coil are shown as a solid bold line, and the anticlockwise turns of the SIN coil are shown as a dashed bold line. In Figure 6b, the clockwise turns of the COS coil are shown as a solid thin line, and the anticlockwise turns of the COS coil are shown as a dash and double-dot bold line. Figure 6c shows the differential SIN and COS coils overlayed one another, as they would be on the stator 300. The particular sections depicted in Figures 6a and 6b contain the ends of the differential SIN and COS coils, i.e. where they terminate (marked by the + and - symbols) and also where the clockwise and anticlockwise turns join. For the sake of simplicity, a different section of the differential SIN and COS coils is shown in Figure 6c, which does not show the terminal ends/joining end. As will be understood, Figures 6a to 6c depict a very small section of the total length of the differential SIN and COS coils, and for the sake of simplicity of depiction are shown as being linear as opposed to being curved. As will also be understood, in order to avoid short-circuiting, the coils/conductors will be sufficiently insulated from each other (and for example located at different depths/layers of the stator 300) where they cross over each other.

A benefit to arranging the SIN and COS coils as differential coils which have a clockwise and an anticlockwise turn per period is that the effect of the residual magnetic field on the signal output by the SIN and COS coils is cancelled, thereby resulting in signals output by the SIN and COS coils that are overmodulated (i.e. the envelope amplitude modulation (or "modulation depth") is greater than 100%, and in the present embodiment is 200%) which results in the modulated signal's phase inverting. Nevertheless, as will be understood, they don't have to be differential coils and the invention is also beneficial for situations/systems in which the signal modulation depth is less than or equal to 100%.

In the embodiment described, the periods of the first, second and third receiver coils match that of their respective scale track (therefore first, second and third receiver coils will all have different periods to each other). As will be understood, in other embodiments, the periods of the receiver coils can be different to the scale periods. In one embodiment, for example, the receiver coils can all have the same coil period.

The stator 300 also comprises an excitation coil 330 (which could also be referred to as a "transmit coil") which is centred on and extends annularly around the axis D. In the embodiment described, the excitation coil 330 is located radially between the first scale receiver coil 304 and the second scale receiver coil 306 and comprises a single-turn (or "single loop") coil. Accordingly, it is wound (extends/turns) circularly around the axis D only once, rather than multiple (e.g. overlapping) times. In the embodiment described, the single loop excitation coil actually comprises two loops of copper, arranged in parallel on adjacent layers of the substrate 302, their ends being joined to a single pair of terminals, to form a single excitation coil that extends around the axis D, concentric with the first 304, second 306 and third 308 receiver coils. In the embodiment described, there is just one single excitation coil 330 which is shared between the three receiver coils (i.e. the one excitation coil 330 is used to generate the electromagnetic field for the three receiver coils). As will be understood, other excitation coil configurations are possible. For instance, the excitation coil need not necessarily be located radially between the first scale receiver coil 304 and the second scale receiver coil 306, and for instance could be located radially between the second scale receiver coil 306 and the third scale receiver coil 308, or for instance could be located radially outside the first scale receiver coil 304, or for instance could be located radially inside the third scale receiver coil 308. For instance, more than one excitation coil could be provided; in such a case, ideally they would all be in resonance. As another example, the/each excitation coil could comprise a multiple-turn (or "multiple-loop") coil. In another example, the/each excitation coil could comprise a "folded-rectangular loop".

In use/during operation, an alternating current is passed through the excitation coil 330 which thereby generates an alternating electromagnetic field which extends across the radial extent of the encoder 100. The first 304, second 306, and a third 308 scale receiver coils are arranged to sense the electromagnetic field and provide outputs in response thereto. As will be understood, and as described in more detail below, the electromagnetic field created by the excitation coil 330 is affected by (i.e. the electromagnetic field is changed by) the presence of the scale features of the first 204, second 206 and third 208 scale tracks on the rotor 200 (which in this embodiment is due to eddy currents created within the scale features ). Therefore the scale features have an amplitude-modulating effect on the ("carrier") electromagnetic field created by the excitation coil 330. Furthermore, the effect on the electromagnetic field as sensed by the first 304, second 306 and third 308 receiver coils, changes as the rotor 200 and stator 300 rotate relative to each other about the B/D axis. This phenomenon is used to determine the relative rotational position of the rotor 200 and stator 300 about the axes B/D (and therefore the relative rotational position of the shaft 500 and static part 600 of the machine about the axis of rotation A).

In the embodiment described, the scale features of the first 204, second 206 and third 208 scale tracks modulate the amplitude of the ("carrier") electromagnetic field as sensed by the first 304, second 306 and third 308 receiver coils. In particular, due to the above-described differing scale periods and phase relationships of the first 204, second 206 and third 208 scale tracks, the effect they each have on the amplitude of the ("carrier") alternating electromagnetic field (as sensed by/induced in the SIN and COS differential coils of their respective first 304, second 306, and a third 308 scale receiver coils), differs from each other, and in essence the rotor creates multiple (in this embodiment, three), radially-localised, differently amplitude modulated, electromagnetic fields. In particular, the scale features of the first 204, second 206 and third 208 scale tracks on the rotor 200 impart cyclical variations in the amplitude of the ("carrier") alternating electromagnetic field at different spatial frequencies (dependent on the relative rotational position of the rotor and stator about the axes A/B/D - which in use are all coaxial). The spatial frequency of the cyclical variation in the amplitude of the electromagnetic field caused by the first scale track and as sensed by the first scale receiver coil 304, the spatial frequency of the cyclical variation in the amplitude of the electromagnetic field caused by the second scale track and as sensed by the second scale receiver coil 306, and the spatial frequency of the cyclical variation in the amplitude of the electromagnetic field caused by the third scale track and as sensed by the third scale receiver coil 308, are all different to each other. Furthermore, due to the differences in the periods of the scale tracks being arranged such that the phase relationship between the scale features of the three scale tracks at any angle about the axis B is mutually exclusive compared to any other angle of rotation (or in other words, due to the first 204, second 206 and third 208 scale tracks being configured such that the phase relationship of the scale features, that is the combination of the phase values, of the scale tracks is unique for each angle about the axis B), the combination of the phase values of the amplitude modulated electromagnetic fields will be unique for each angle of relative rotation of the rotor 200 and stator 300 about the axis of rotation A. This phenomenon enables an absolute position of the rotor 200 and stator 300 about the axis of rotation to be established. For instance, as explained in more detail below, due to this phenomenon, there will be a corresponding cyclical variation in the amplitudes of the alternating currents output by the first 304, second 306, and a third 308 scale receiver coils, from which the absolute position of the rotor 200 and stator 300 can be derived.

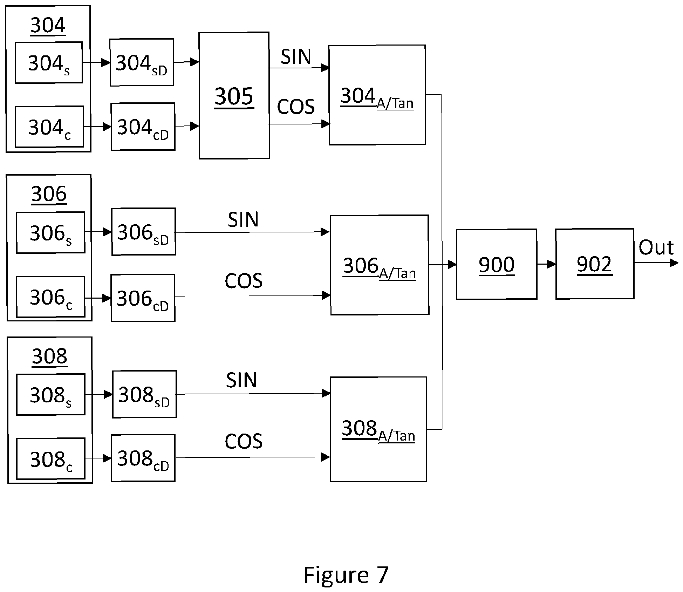

Figure 7 is a block diagram of an example system for determining the relative rotational position of the rotor 200 and stator 300 about the axes B/D using the outputs of the differential SIN and COS coils of the first 304, second 306 and third 308 scale receiver coils. As explained above in connection with Figures 4, 5 and 6, each of the first 304, second 306 and third 308 scale receiver coils comprise overlapping differential SIN and COS. This is schematically illustrated in Figure 7, wherein a first one of the coils in a pair is labelled with a "s" suffix and the other of the coils in a pair is labelled with a "c" suffix. Accordingly, Figure 7 schematically illustrates that the first receiver coil 304 comprises a (differential) SIN coil 304, and a (differential) COS coil 304_{c}, the second receiver coil 306 comprises a (differential) SIN coil 306, and a (differential) COS coil 306_{c}, and the third receiver coil 308 comprises a (differential) SIN coil 308, and a (differential) COS coil 308_{c}.

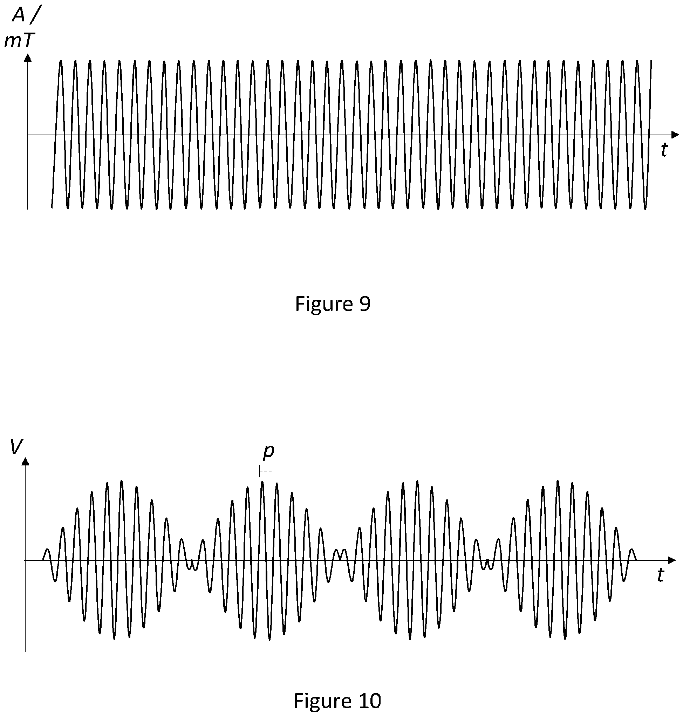

As mentioned above, the presence of the respective scale track features causes the amplitude of the ("carrier") alternating electromagnetic field generated by the excitation coil to be modulated depending on the relative rotational position of the stator and rotor. Accordingly, as described in more detail below in connection with Figures 9 to 13, the signals sensed by/induced in, and the alternating voltage/signals output by, the (differential) SIN and COS coils are amplitude modulated, and in accordance with the present invention are subsequently demodulated in order to derive relative rotational position information therefrom. Accordingly, in the embodiment described, and as schematically depicted in Figure 7, each (differential) SIN and COS coil has its own respective demodulator (304_{sD}, 304_{cD}, 304_{sD}, 306_{cD}, 308_{sD}, 308_{cD}) for demodulating the signal therefrom. As explained in more detail below (with reference to Figures 9 to 13), the demodulators demodulate the signals output by their respective differential SIN and COS coils, to obtain respective demodulated/baseband signals, labelled in Figure 7 as "SIN" and "COS" signals.

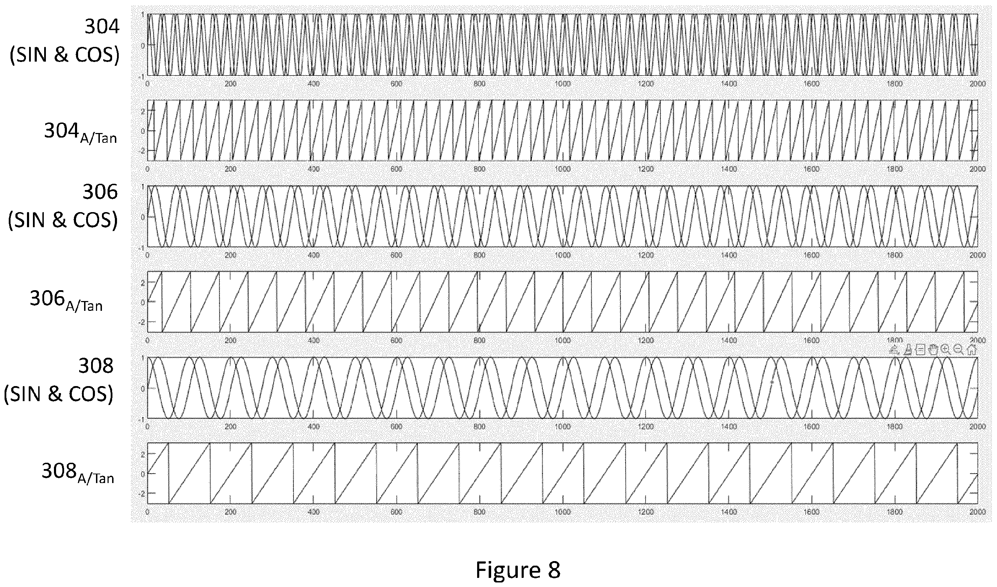

As illustrated, the corresponding (demodulated/baseband) SIN and COS signals of each of the first 304, second 306 and third 308 scale receiver coil (as output by their corresponding demodulator) are provided to a corresponding Arc Tangent Calculator (i.e. a first Arc Tangent Calculator 304_{A/Tan}, a second Arc Tangent Calculator 306_{A/Tan}, and a third Arc Tangent Calculator 308_{A/Tan}) which calculates an angle from the pair of SIN and COS signals. Figure 8 illustrates how the angles calculated by each of the first 304_{A/Tan}, second 306_{A/Tan}, and third 308_{A/Tan} Arc Tangent Calculators vary with relative rotation of the stator and rotor about the axes B/D.

As mentioned above in connection with Figure 3, the periods of the first 204, second 206 and third 208 scale tracks are different. In particular, the first 204, second 206 and third 208 scale tracks and the first 304, second 306 and third 308 receiver coils are configured such that for each angle of rotation of the rotor and stator about the axes B/D the signal phase values of the at least three separate signal channels have a unique combination. This enables an absolute rotational position to be determined from the outputs of the three Arc Tangent Calculators.

As will be understood, each of the scale tracks and associated scale receiver coils and electronics (e.g. the Arc Tangent Calculators) form a "signal channel". In this embodiment: the first scale track 204, first receiver coil 304 and first Arc Tangent Calculator 304_{A/Tan}, form a first signal channel; the second scale track 206, second receiver coil 306 and second Arc Tangent Calculator 306_{A/Tan}, form a second signal channel; and the third scale track 208, third receiver coil 308 and third Arc Tangent Calculator 304_{A/Tan}, form a third signal channel.

In this embodiment, the first scale track 204 has the highest number of integer periods per revolution, and could be referred to as the "Incremental Track" (and hence the channel associated therewith could be referred to as the "Incremental Channel"). The second 206 and third 208 scale tracks signal channels have a lower number of periods per revolution compared to the first scale track 204. The second a third scale tracks (and hence the signal channels associated therewith) could be referred to as (first and second) "Vernier Tracks" (and hence the second and third signal channels associated therewith could be referred to as "Vernier Channels"). In the embodiment described the first 204, second 206 and third 208 scale tracks are configured such that such that the only common integer factor of the period count of all of the scale tracks is 1. As will be understood, other terms used in the art of inductive encoders for "period count" include "feature count" and "line count".

Compared to a two-channel system, a three-channel system provides significantly greater freedom in the choice of the number of periods of each channel and provides a greater error tolerance in the calculation of the channel phase. This error tolerance allows a high number of incremental periods per revolution to be used and hence large diameter encoders are possible. Nevertheless, the present invention is applicable to systems with just two or even just one channel.

The relatively large error tolerance on the phase detection allows small signal amplitudes to be used for the Vernier Channels with a lower signal to noise ratio. Indeed, it has been found that with a three-channel system limited or no filtering and automatic/dynamic signal correction need be applied to the Vernier Channels, thereby simplifying the design of and reducing the cost of the inductive rotary encoder system. Therefore, as shown in Figure 7, in the embodiment described, only SIN and COS signals from the first receiver coil 304 pass through an automatic/dynamic signal corrector 305, which in this embodiment performs automatic/dynamic gain correction (AGC), automatic/dynamic offset correction (AOC), automatic/dynamic balance correction (ABC), and automatic/dynamic phase correction (APC), on the output from the first receiver coils 304, before being passed to its corresponding Arc Tangent Calculator 304_{A/Tan}.

The output from each of the first 304_{A/Tan}, second 306_{A/Tan}, and third 308_{A/Tan} Arc Tangent Calculators is passed to a position calculator 900 which calculates therefrom the absolute position of the stator and rotor about the axis of rotation. For instance, this could be done via a function or look-up table based on the values of each channel/outputs from the three Arc Tangent Calculators. However, in the embodiment described, the absolute position is calculated by a loop which increments through every possible incremental period and compares the actual Vernier phases to the expected Vernier phases for that period. Once the loop has been completed, there should only be one position detected. The use of an iterative loop for determining the position is particularly preferred over the use of other techniques, such as those that use a look up table. For instance, an iterative loop can be more efficient, especially from a memory point of view, and also more versatile (e.g. if the process is to be used across different sized inductive rotary encoders).

For example, the position calculator 900 can be configured to take the value output by the first Arc Tangent Calculator 304_{A/Tan}, and then, for each of the scale periods of the first scale track/incremental channel (in the embodiment described for each of the sixty-four scale periods), identify what value you would expect to see from the second 306_{A/Tan} and third 308_{A/Tan} Arc Tangent Calculators. The position calculator 900 then compares the expected values with the actual values output by the second 306_{A/Tan} and third 308_{A/Tan} Arc Tangent Calculators, and checks if they match. Whether or not they match is recorded. As mentioned above, this is repeated for each of the scale periods of the first scale track/incremental channel (in the embodiment described for each of the sixty-four scale periods). There should be only one match, and if so then that matched position is provided to the output unit 902. If there are no matches, or more than one match, an error state is reported to the output unit 902. Output unit 902 can be any suitable unit for outputting/communicating the position information/error state to an external device, e.g. such as a position controller, including via a wired or wireless connection.

As will be understood, the Arc Tangent Calculators 304_{A/Tan}, 306_{A/Tan}, 308_{A/Tan} and the position calculator 900 can comprise any suitable processing device, including, but not limited to bespoke processing devices configured for the specific application (e.g. a field programmable gate array "FPGA") as well as a more generic processing devices which can be programmed (e.g. via software) in accordance with the needs of the application in which it is used. Accordingly, suitable processing devices include, for example, a microprocessor, CPU (Central Processor Unit), FPGA (Field Programmable Gate Array), or ASIC (Application Specific Integrated Circuit), or the like.

How the signals output by the first 304, second 306 and third 308 scale receiver coils are generated and processed will now be explained in more detail with reference to Figures 9 to 13. As mentioned above, an alternating current is passed through the excitation coil 330 thereby generating an alternating electromagnetic field which extends across the radial extent of the encoder 100. Reference is made to Figure 9 which schematically illustrates an example alternating current A used to drive the excitation coil 330, and also inherently schematically illustrates the magnitude *mT* of the carrier alternating electromagnetic field created by that drive current (the "carrier signal"). The alternating current will create an electromagnetic field which alternates at a predetermined frequency *f*, which in the embodiment described is 3MHz.

The alternating electromagnetic field created by the excitation coil 330 is, in essence, a "carrier signal" having a "(predetermined) carrier frequency" *f* (which is dictated by the frequency of the alternating current driving the excitation coil 330, and which in this embodiment is 3MHz), and therefore can be (and is herein) referred to as a "carrier (electro)magnetic field" or "carrier alternating (electro)magnetic field", or simply referred to as the "carrier signal". Due to the amplitude-modulating effect of the features of the scale tracks 204, 206, 208 of the rotor 200, the amplitude of the carrier signal, as sensed by the receiver coils, is modulated thereby creating an amplitude-modulated electromagnetic field (or in other words an "amplitude modulated signal"). In particular, in the embodiment described, due to there being three separate scale tracks 204, 206, 208 which have different periods of scale features, the rotor 200 modulates the amplitude of the carrier alternating electromagnetic field differently within the vicinity of the three different radial locations of the three separate scale tracks 204, 206, 208. Accordingly, the rotor could be described as creating three different "amplitude-modulated electromagnetic fields" or in other words three different "amplitude-modulated signals"; a first of which is sensed by the first scale receiver coil 304, a second of which is sensed by the second scale receiver coil 306 and a third of which is sensed by the third scale receiver coil 308. In other words, the rotor creates multiple (in this embodiment, three) different radially-localised amplitude-modulated electromagnetic fields.

As already explained, the first 304, second 306, and a third 308 scale receiver coils are arranged to sense the ("carrier") alternating electromagnetic field (i.e. the "carrier signal") and provide outputs in response thereto. The signal sensed (induced within) and output by a differential coil of the first 304, second 306 or third 308 scale receiver coil, is in essence the voltage induced in the differential coil by the alternating electromagnetic field generated by the excitation coil 330 and as manipulated by the rotor 200.

Due to the effect of the scale features, the carrier alternating electromagnetic field/"carrier signal" (as sensed by/induced in the SIN and COS differential coils of their respective first 304, second 306, and a third 308 scale receiver coils), is amplitude modulated by the presence of the scale features of the first 204, second 206 and third 208 scale tracks on the rotor 200. In particular, in the embodiment described, the amplitude of the carrier alternating electromagnetic field/"carrier signal" is modulated by the presence of the scale features. Furthermore, the effect the first 204, second 206 and third 208 scale tracks on the rotor 200 have on the amplitude of the carrier alternating electromagnetic field (as sensed by the SIN and COS differential coils of their respective first 304, second 306, and a third 308 scale receiver coils) varies with relative rotation of the rotor 200 and stator 300 about the axes B/D. In particular, such effect on the amplitude of the carrier alternating electromagnetic field/"carrier signal" (as sensed by the SIN and COS differential coils) varies in a spatially-cyclical manner, the spatial frequency of which depends on the period of the scale features.

Figure 10 shows a graph of an example amplitude-modulated signal as sensed/induced within and output by one of the differential coils (e.g. the differential SIN coil, or the differential COS coil) of one of the first 304, second 306, and a third 308 scale receiver coils, as the rotor 200 and stator 300 rotate at a constant speed. As can be seen, the voltage induced in the differential coil alternates at the same frequency as that of the predetermined carrier frequency *f* of the electromagnetic field generated by the excitation coil 330. However, as can also be seen in Figure 10, the envelope amplitude of the alternating voltage induced in the differential coil varies with time. Due the coil being a differential coil, the envelope amplitude is overmodulated (in this embodiment the modulation level/depth is 200%) which causes a phase inversion of the carrier at the zero crossover point of the envelope.

As mentioned above, in the scenario depicted in Figure 10, the rotor 200 and stator 300 are rotating at a constant speed, and therefore the scale features cause a sinusoidal change in the envelope amplitude of the alternating voltage induced in the differential coil over time. As will be understood, if the rotor 200 and stator 300 are not rotating relative to each other at a constant speed, then the envelope amplitude of the alternating voltage induced in the differential coil will vary differently to that shown in Figure 10. Indeed, for example, if the rotor 200 and stator 300 are not rotating relative to each other at all, then the envelope amplitude of the alternating voltage induced in the differential coil will be constant over time.

Accordingly, because the envelope amplitude of the alternating voltage induced in the differential coil is dependent on the relative rotational position of the rotor 200 and stator 300, the envelope amplitude of the alternating voltage induced in the differential coil can be used to determine the relative angular position of the rotor 200 and stator 300. In accordance with the present invention, the alternating voltage induced in the differential coil is demodulated in order to obtain a reconstructed baseband signal which is representative of the envelope amplitude of the alternating voltage induced in the differential coil at any given moment in time. The reconstructed baseband signal can then be used in the process of determining the relative position of the rotor 200 and stator 300, as explained above in connection with Figure 8. In particular, the demodulated reconstructed baseband signals from the differential SIN and COS coils are passed to an Arc Tangent calculator which calculates an angle from the pair of SIN and COS signals, and that angle is then passed to a position calculator 900 in order to determine an absolute position from the three signal channels.

In accordance with the present invention, in the embodiment described, the demodulation of the alternating current induced in a differential coil of the rotor (i.e. the differential SIN or COS coils of the first 304, second 306 and third 308 scale receiver coils) involves sampling the alternating voltage induced in the differential coil so as to obtain: i) a plurality of temporally-distinct sampled points each of which is obtained at a first predetermined phase with respect to the period of an, or a notional, unmodulated version of the carrier signal; and ii) a plurality of temporally-distinct sampled points each of which is obtained at a second predetermined phase with respect to the period of an, or a notional, unmodulated version of the carrier signal. The unmodulated carrier signal can be known (e.g. from the transmitter coil's drive signal), or unknown.

In the embodiment described, the sampling points are obtained every Nth cycle and every Mth cycle of the unmodulated carrier signal, where N and M are positive integers, and wherein in the present embodiment N =3 and M = 3. (As will be understood, different sampling rates and schemes are possible and within the scope of the present invention; for instance, it isn't necessary for N and M to be equal, and/or N and/or M could be variable, e.g. depending on circumstances). This is schematically illustrated in Figure 11 which shows the graphs of Figures 9 and 10 superimposed on each other. Accordingly, the dotted signal in Figure 11 represents an example unmodulated version of the carrier signal. The solid dots mark the points in time at which the unmodulated carrier signal will have a first phase value (in this embodiment 90°) with respect to the period of the, or a notional, unmodulated version of the carrier signal, and the hollow dots mark the points in time at which the unmodulated carrier signal will have a second (different) phase value (in this embodiment 270°) with respect to the period of the, or a notional, unmodulated version of the carrier signal . Accordingly, in this embodiment, the differences between the first and second phase values is 180°. In the embodiment described, the phase values are selected such that carrier peaks of the amplitude-modulated signal are sampled. In Figure 11, for the sake of simplicity and for ease of description, it is depicted that the carrier peaks of the carrier alternating magnetic field (and which represents an unmodulated version of the carrier signal) coincide with the carrier peaks of the amplitude modulated signal, but as will be understood, this need not necessarily be the case, and in reality they could be offset (i.e. phase/time offset).

As can be seen, due to the output of a differential SIN or COS coil having an envelope amplitude modulation level (or "modulation depth") of greater than 100% (and in this embodiment 200%) which causes a phase inversion of the output signal with respect to the carrier signal at the envelope's zero crossover point, the phase relationship between the unmodulated carrier signal and the amplitude modulated signal shifts by 180°.

The resulting sampled points are then shown in isolation in Figure 12. As illustrated in Figure 13, the polarity of the points that were sampled at the second phase value are inverted resulting in a reconstructed demodulated baseband signal as illustrated by the solid line in Figure 13. As will be understood, in an alternative embodiment, the polarity of the points sampled at the first phase value could be inverted instead.

Figures 14 to 16 are substantially identical to Figures 11 to 13, except that they illustrate an amplitude-modulated signal having a modulation depth of less than 100% (e.g. because the coils that sensed and output the amplitude-modulated signal is not a differential coil). As can be seen, in this embodiment there is no phase inversion of the output signal with respect to the carrier signal.

An advantage of obtaining sampled points obtained at first and second predetermined phases (with respect to the period of the, or a notional, unmodulated version of the carrier signal) having a phase difference of 180°, is that such sampled points can be processed in a way which removes symmetrical errors in the reconstructed baseband signal caused by non-linearities in the processing electronics for sensing and/or demodulating the amplitude-modulated signal.

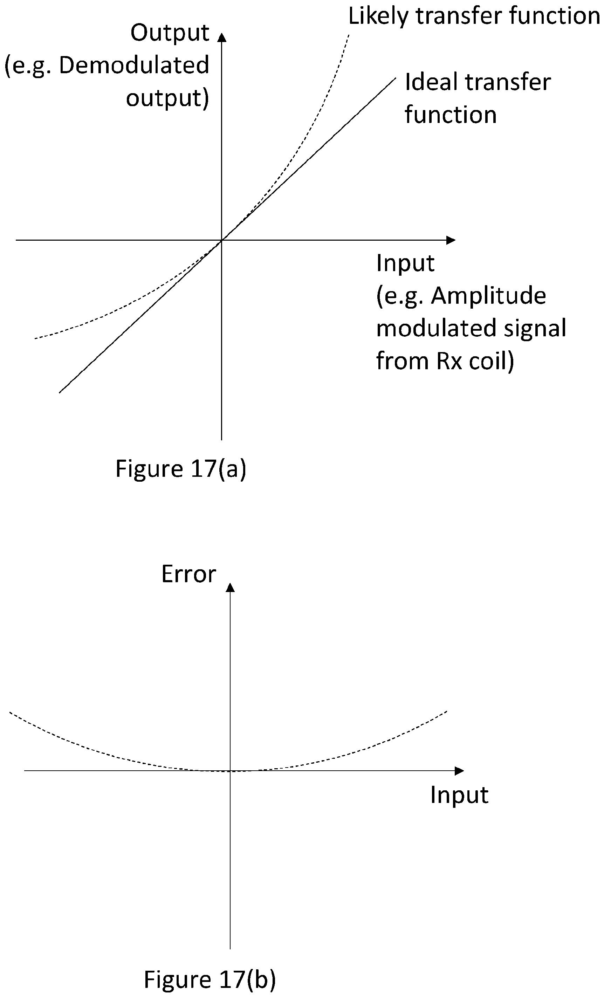

In Figure 17(a) the solid black line illustrates a notional ideal transfer function (i.e. output/input) where there are no non-linearities in the processing electronics (for sensing and/or demodulating the amplitude-modulated signal), whereas the dashed curved line illustrates a more likely situation in which there are non-linearities in the processing electronics (for sensing and/or demodulating the amplitude-modulated signal), and as such, as illustrated in Figure 17(b) results in the transfer function having a symmetrical error, and therefore results in symmetrical errors in a reconstructed baseband signal that is derived from the raw sampled points.

Such symmetrical errors can be reduced or removed by, for example, averaging multiple successive points (after the above-described inversion of one of the sets of sampled points) (e.g. a continuous (moving) two-point averaging process). In an alternative example, successive points can be subtracted and the result divided by the number of points used in the subtraction.

As will be understood, such processing will introduce a latency. Nevertheless, this has been found to provide a significant improvement to the errors of the encoder system by cancelling out non-linearities in the processing electronics for sensing and/or demodulating the amplitude-modulated signal.

As will be understood, the above-described particular radial positions of the scale tracks 204, 206, 208 and the corresponding excitation 330 and scale receiver coils 304, 306, 308 are not essential and could be arranged to have different radial positions/combinations. For instance, the rotor 200 could be configured such that the first scale track 204 sits radially between the second 206 and third 208 scale tracks (and therefore the stator 300 could be configured such that the corresponding first receiver coil 304 sits radially between the second 306 and third 308 scale receiver coils).

In the embodiment described, the shape of the differential SIN and COS coils is sinusoidal for harmonic suppression reasons. Of course, the coil shape/path does not have to be sinusoidal. For instance, the coils could have a different periodic shape/path to pick up the modulation from the scale.

In the embodiment described, the period of the sinusoidal form of the first 304, second 306, and a third 308 scale receiver coils are different to each other (and in the example described are configured such that the period of the sinusoidal form of the first 304, second 306, and a third 308 scale receiver coils matches that of their corresponding scale track). As will be understood, this doesn't have to be the case, although doing so can be beneficial from a processing and signal quality point of view.

In the embodiment described, each of the SIN and COS differential coils of the first 304, second 306 and third 304 receiver coils comprise a single-turn (or "single loop") coil. In another embodiment, one or more of receiver coils could comprise a multiple-turn (or "multiple-loop") coil.

In the embodiments described above, there are multiple scale tracks and multiple receiver coils. However, as will be understood, this need not necessarily be the case, and for instance just one scale track and one corresponding receiver coil could be provided, or for example two scale tracks and two corresponding receiver coils having different periods. For example, in the case of just a single track and single receiver coil, incremental position could be determined from the output of a pair of SIN and COS coils (e.g. 304ₛ and 304_{c}). Furthermore, whilst having a pair of coils phase-offset from each other (e.g. the SIN and COS coils of the embodiments described herein) in a signal channel be useful (e.g. especially in the case of an incremental encoder where complete signal phase cycles are counted to monitor relative position, having a pair of phase-offset signals helps to establish the direction of motion/rotation of the rotor 200 and stator 300), this isn't always necessary, and so it is possible that a scale receiver coil (e.g. the first scale receiver coil 304) comprises just one single coil, rather than the pair of SIN and COS coils as described herein.

In the embodiments described, the carrier frequency/period (and phase) is known from the drive circuitry/current driving the excitation coil. However, as will be understood, this is not necessary in order to ensure that sampled points are obtained at first and second phases (or even first and second predetermined phases) with respect to the period of an unmodulated version of the carrier signal. Instead, for example, the carrier frequency (and phase if desired) can be derived from the zero crossing points of the amplitude-modulated signal sensed by/induced in and output by the receiver coil, from which appropriate sampling points/times can be selected to ensure that sampling points are obtained at first and second phases with respect to the period of an (e.g. notional) unmodulated version of the carrier signal. Indeed, such a process is particularly straightforward when the modulation depth is not more than 100%, because in such cases the phase of the carrier as sensed by/induced in and output by the receiver coil does not shift. In alternative embodiments, the carrier frequency/period (e.g. the unmodulated version of the carrier signal) could be assumed - for instance a value indicative of the carrier frequency/period could be provided (e.g. from an external source, such as an input from a user), and which is assumed to be correct.

In the embodiment described, the sampled points are configured to coincide with carrier peaks of the amplitude-modulated signal. However, as will be understood, whilst this can be preferable to obtain the largest amplitude reconstructed baseband signal, this need not necessarily be the case and the sampled points can be offset from such carrier peaks of the amplitude-modulated signal.

In the embodiment described, the phase difference between the first and second phases (with respect to the period of the, or a notional, unmodulated version of the carrier signal) is 180°. However, as will be understood, this need not necessarily be the case. As will be understood, in other embodiments, the sampling can be configured such that there is obtained: a plurality of temporally-distinct sampled points each of which is obtained at a third phase with respect to the period of the, or a notional, unmodulated version of the carrier signal, wherein the third phase is different to both the first and second phases.

The embodiments described above have been in connection with a rotary inductive encoder. However, as will be understood, this need not necessarily be the case and the invention is equally applicable and useful to linear inductive encoders, or indeed any other type of system which needs to demodulate an amplitude modulated signal. Accordingly, the present invention could also be used in signal receivers for demodulating amplitude modulated signals, such as radio receivers.

## Claims

1. A method of demodulating an amplitude-modulated signal, which is the result of a baseband signal that has been amplitude-modulated onto a carrier signal having a carrier frequency, the method comprising:
a) sampling the amplitude-modulated signal so as to obtain a series of sampled points comprising:
i) a plurality of temporally-distinct sampled points each of which is obtained at a first phase with respect to the period of an unmodulated version of the carrier signal; and
ii) a plurality of temporally-distinct sampled points each of which is obtained at a second phase with respect to the period of an unmodulated version of the carrier signal, wherein the second phase is different to the first phase;
b) using the sampled points of i) and ii) to form a reconstructed baseband signal.

2. A method as claimed in claim 1, in which the phase difference, with respect to the period of an unmodulated version of the carrier signal, between the first and second phases is 180°.

3. A method as claimed in claim 2, configured such that the sampled points of i) and ii) coincide with carrier peaks of the amplitude-modulated signal.

4. A method as claimed in any preceding claim, in which:
the plurality of sampled points of i) are obtained at regular time-spaced intervals, such that a sample point is obtained at the first predetermined phase every N^{th} cycle of an unmodulated version of the carrier signal; and/or
the plurality of sampled points of ii) are obtained at regular time-spaced intervals, such that one sample point is obtained at the second predetermined phase every M^{th} cycle of an unmodulated version of the carrier signal,
where N and M are positive integers.

5. A method as claimed in claim 4, where N = M.

6. A method as claimed in any preceding claim, in which step b) comprises processing the sampled points to derive a reconstructed baseband signal which has reduced errors caused by non-linearities in the transfer function of the system for sensing and/or demodulating the amplitude-modulated signal.

7. A method as claimed in claim 6, in which the processing comprises averaging multiple sampled points.

8. A method as claimed in any preceding claim, in which the modulation depth of the amplitude-modulated signal is greater than 100%.

9. A method as claimed in any preceding claim, in which the amplitude-modulated signal is a signal output by a receiver coil of an inductive encoder apparatus.

10. A method as claimed in claim 9, in which the inductive encoder apparatus comprises:
• a first member comprising a scale track; and
• a second member comprising an excitation coil and the receiver coil; wherein:
• the first and second members are relatively moveable along a measurement direction; and
• the signal output by the receiver coil is induced in the receiver coil by an alternating carrier magnetic field generated by an alternating current passing through the excitation coil, the amplitude of the alternating carrier magnetic field being modulated by the scale track dependent on the relative position of the first and second members along the measurement direction.

11. A method as claimed in claim 10 in which the inductive encoder apparatus is a rotary encoder apparatus, wherein the first and second members are relatively rotatable about an axis of rotation, and wherein the measurement direction is a rotational measurement direction.

12. A method as claimed in claim 10 or 11, in which the excitation and/or receiver coil comprises a single-turn coil.

13. An inductive encoder apparatus comprising first and second members relatively moveable along a measurement direction, wherein:
• the first member comprises at least a first scale track;
• the second member comprises an excitation coil and at least a first receiver coil;
• the inductive encoder apparatus is configured to:
∘ pass an alternating current through the excitation coil at a predetermined frequency so as to generate a carrier alternating magnetic field having a carrier frequency, the amplitude of which is modulated by the first scale track dependent on the relative position of the first and second members along the measurement direction, whereby an amplitude-modulated signal is induced in the first receiver coil by the alternating magnetic field as modulated by the first scale track;
∘ sample the amplitude-modulated signal induced in the first receiver coil so as to obtain:
▪ i) a plurality of temporally-distinct sampled points each of which is obtained at a first phase with respect to the period of the carrier alternating magnetic field; and
▪ ii) a plurality of temporally-distinct sampled points each of which is obtained at a second phase with respect to the period of the carrier alternating magnetic field;
∘ use the sampled points of i) and ii) to form a signal representative of the envelope amplitude of the first receiver coil's amplitude-modulated signal, and to use that signal in determining the relative position of the first and second members.

14. An apparatus as claimed in claim 13 in which the inductive encoder apparatus is a rotary encoder apparatus, wherein the first and second members are relatively rotatable about an axis of rotation, and wherein the measurement direction is a rotational measurement direction.

15. An apparatus as claimed in claim 13 or 14, in which the excitation comprises a single-turn coil and/or the receiver coil comprises a single-turn coil.

16. An apparatus as claimed in any of claims 13 to 15, in which the receiver coil comprises a differential coil.

17. A method of demodulating an amplitude-modulated signal, which is the result of a baseband signal that has been amplitude-modulated onto a carrier signal having a carrier frequency, the method comprising:
a) sampling the amplitude-modulated signal so as to obtain sampled points which comprise:
i) a plurality of temporally-distinct sampled points each of which is obtained at a first phase with respect to the period of an unmodulated version of the carrier signal; and
ii) a plurality of temporally-distinct sampled points each of which is obtained at a second phase with respect to the period of an unmodulated version of the carrier signal;
b) using the sampled points of i) and ii) to form a reconstructed version of the baseband signal that has reduced symmetrical error caused by non-linearities in the processing electronics for sensing and/or demodulating the amplitude-modulated signal.
